**Europäisches Patentamt**

**European Patent Office**

**Office européen des brevets**

(19)

(11) Veröffentlichungsnummer : **0 312 903 B1**

(12) # EUROPÄISCHE PATENTSCHRIFT

(45) Veröffentlichungstag der Patentschrift :
28.08.91 Patentblatt 91/35

(51) Int. Cl.⁵ : **F24D 3/10, F25D 17/02**

(21) Anmeldenummer : 88116919.7

(22) Anmeldetag : 12.10.88

(54) **Einrichtung bei Wärme erzeugende Anlagen beispielsweise bei Heizungsanlagen oder bei Verlustwärme erzeugenden Anlagen.**

(30) Priorität : 20.10.87 AT 2774/87
24.06.88 AT 1644/88

(43) Veröffentlichungstag der Anmeldung :
26.04.89 Patentblatt 89/17

(45) Bekanntmachung des Hinweises auf die
Patenterteilung :
28.08.91 Patentblatt 91/35

(84) Benannte Vertragsstaaten :
AT BE CH DE FR IT LI LU NL

(56) Entgegenhaltungen :
AT-A- 382 450

(56) Entgegenhaltungen :
FR-A- 2 503 843
CHAUD-FROID-PLOMBERIE, Band 39, Nr. 457,
März 1985, Seiten 53-58; F. CROQUELOIS: "Le
point de fonctionnement"

(73) Patentinhaber : Zortea, Rembert
Rudolf v. Ems-Strasse 32
A-6845 Hohenems (AT)

(72) Erfinder : Zortea, Rembert
Rudolf v. Ems-Strasse 32
A-6845 Hohenems (AT)

(74) Vertreter : Hefel, Herbert, Dipl.-Ing.
Egelseestrasse 65a
A-6800 Feldkirch-Tosters (AT)

## Beschreibung

Die Erfindung bezieht sich auf eine Anlage mit mehreren Maschinen, Maschinensätzen, Arbeitsvorrichtungen, Geräten oder dgl. mit den Merkmalen des Oberbegriffes des Patentanspruches 1 bzw. auf eine Heizungsanlage mit mindestens einer Wärmequelle mit den Merkmalen des Oberbegriffes des Patentanspruches 2.

Es ist in diesem Zusammenhang einleitend auf die vorbekannte Blockspeicheranlage nach der DE-OS 2418051 zu verweisen. Die hier beschriebene Einrichtung zielt darauf ab, einen Öltank bei einer bisher ölbefeuerten Heizungsanlage als elektrisch beheizbarer Speicherbehälter in das Anlagensystem zu integrieren, wobei dem Umstand Rechnung zu tragen ist, daß dieser Speicherbehälter nicht als Druckbehälter ausgebildet ist, andererseits jedoch die Anlage selbst als Drucksystem ausgebildet sein muß, wobei hier zumindest die statische Druckhöhe der gesamten Heizungsanlage zu berücksichtigten ist. Der als druckloser Speicherbehälter ausgebildete Behälter, in welchem das Heizmedium drucklos mit elektrischer Energie aufgeheizt wird, ist über einen Zwischendruckbehälter mit dem Heizkreis verbunden, wobei sowohl die Vorlaufleitungen beider Kreise, wie auch die Rücklaufleitungen beider Kreise in diesen Behälter münden. Im Mündungsbereich sind die entsprechenden Leitungen mit magnetisch betätigbaren Absperrventilen bestückt und in der Vorlaufleitung zum Speicherbehälter ist noch eine Umlaufpumpe vorgesehen. Die erwähnten Magnetventile werden in Abhängigkeit von der Temperatur und vom Druck im Zwischendruckbehälter gesteuert. Das Volumen des Zwischendruckbehälters ist so groß bemessen, daß mit dem darin befindlichen Medium die Heizanlage versorgt werden kann. Wenn nun der Zwischendruckbehälter mit warmem Wasser vorgewählter Temperatur aufgefüllt bzw. das abgekühlte Warmwasser, das hier als Wärmeträger dient, gemischt werden soll, werden die im Heizungsvorlauf und Heizungsrücklauf befindlichen Absperrventile geschlossen und das im Behälterrücklauf befindliche Absperrventil geöffnet, so daß ein Umwälzkreislauf zwischen dem drucklosen Speicherbehälter und dem Zwischendruckbehälter entsteht. Die Speicherpumpe sorgt dabei für die Umwälzung des warmen Wassers aus dem drucklosen Speicherbehälter in den nun auch drucklosen Zwischendruckbehälter, bis dort die gewünschte Temperatur erreicht ist, worauf in der Rücklaufleitung zum Speicherbehälter das Ventil geschlossen wird, so daß die Umlaufpumpe im Zwischendruckbehälter nunmehr den Druck aufbaut, der der statischen Höhe der Heizungsanlage entspricht. Hat im Zwischendruckbehälter das Heizungswasser die gewünschte Temperatur und den notwendigen Druck erreicht, so werden die Absperrventile in der Vorlauf- und in der Rücklaufleitung des Heizkreises geöffnet und die Umlaufpumpe in diesem Heizkreis eingeschaltet, so daß nunmehr die Wärmeenergie des aufgeheizten und im Zwischendruckbehälter befindlichen Wassers an den Heizkreislauf abgegeben werden kann. Die erwähnten Magnetventile werden also abwechselnd betätigt, um den Zwischendruckbehälter entweder mit dem Speicherbehälter zu verbinden oder aber mit dem Heizkreislauf, so daß in diesem Zwischendruckbehälter die Druckverhältnisse sich ständig ändern. Während des Aufheizens ist der Zwischendruckbehälter drucklos und vom Heizkreislauf abgetrennt. Ist das Heizmedium jedoch aufgeheizt und ist bei nachfolgender Sperrung der Rücklaufleitung zum Speicherbehälter über die in der Vorlaufleitung vom Speicherbehälter vorgesehenen Umlaufpumpe der Druck auf das Niveau des im Heizkreis befindlichen Druckes angehoben, so werden die Magnetventile des Heizkreislaufes geöffnet und die im Heizkreislauf vorgesehene Umlaufpumpe zugeschaltet. Ist die im Heizmedium gespeicherte Wärme über den Heizkreislauf abgegeben worden und wird der Heizkreislauf wiederum vom Zwischendruckbehälter getrennt und dieser anschließend mit dem Speicherbehälter verbunden, so beginnt das einleitend geschilderte Wechselspiel von neuem.

Ferner sind in diesem Zusammenhang auch die vorbekannten Anlagen zur Warmwasserbereitung nach den AT-PS 368272 und 382450 zu erwähnen. Zwischen einer Heiz- und Wärmequelle, in der das Brauchwasser aufgeheizt wird und den Speicherbehältern, in welchen das aufgeheizte Brauchwasser für die direkte Entnahme gespeichert ist, ist ein Zwischenspeicher vorhanden, wobei es sich hier beim Brauchwasserkreis um einen offenen Kreis handelt, also um einen solchen Kreis, der ständig mit dem öffentlichen Wasserversorgungsnetz verbunden ist, über welchen die Menge des aus der Anlage abgezogenen und aufgeheizten Brauchwassers ständig ersetzt wird. In diesen Zwischenspeicher münden die Vorlaufleitungen und die Rücklaufleitungen der einzelnen Kreise. Aufgrur des offenen Kreislaufes, der hier vorgesehen ist, herrscht in dieser Anlage ständig ein mehr oder weniger konstanter Druck, dessen Größe abhängig ist vom Druck im öffentlichen Wasserversorgungsnetz. In den erwähnten Zwischenspeicher münden die Vorlauf- und die Rücklaufleitung der Heiz- und Wärmequelle sowie die Vorlaufleitung und die Rücklaufleitung der Speicher, die hier aber über Verteiler zusammengefaßt sind. Der hier vorgesehene Zwischenspeicher hat die Aufgabe, im sogenannten Ladeverfahren die eigentlichen Speicherbehälter mit Warmwasser zu versorgen.

Es sind hier vorerst solche Einrichtungen zu berücksichtigen und zu betrachten, die beim betriebsmäßigen Einsatz Verlustwärme erzeugen, die abgeführt werden muß. Solche Einrichtungen können beispielsweise Werkzeugmaschinen sein, die in einem geschlossenen Kühlkreislauf eingebunden sind, oder Fertigungsmaschinen in der Nahrungsmittelindustrie oder auch Maschinen, wie sie in der Verfahrenstechnik oder bei der Kunststofferzeugung oder Kunststoffverarbeitung verwendet werden, auch Klimaanlagen bei großräumigen Gebäuden sind hier mit einzuschließen. Als Kühlmedium für den Transport der Verlustwärme dient Wasser oder ein Kühlöl, je nach dem, auf welchem Temperaturniveau die Verlustwärme liegt. Solche Einrichtungen und Anlagen besitzen eine zentrale Kühleinrichtung, an welche die Verlustwärme erzeugenden Anlagen und Anlagenteile angeschlossen sind. Bei solchen Anlagen mußte wiederholt festgestellt werden, vor allem wenn es sich um großräumige Anlagen handelt, daß das die Verlustwärme zur zentralen Kühleinrichtung transportierende Kühlmedium innerhalb der hier erwähnten Kreise Wege einschlägt, die nicht ohne weiteres voraussehbar sind mit der Folge, daß die zu kühlende Anlage bzw. die zu kühlenden Anlageteile nicht immer ordnungsgemäß gekühlt werden können und in der Folge dadurch sogar in ihrer Funktionsfähigkeit beeinträchtigt werden können, wenn nicht gar Schaden erleiden. Bedingt ist dies offenbar dadurch, daß die in den einzelnen Kreisläufen vorgesehenen Umlaufpumpen mit Kreisläufen zusammenwirken, die sehr unterschiedliche Strömungswiderstände aufweisen können, wobei sich diese Strömungswiderstände im Betrieb sogar noch verändern können. Auch können die Umlaufpumpen sehr unterschiedliche Förderleistungen besitzen. Ferner können bestehende Einrichtungen erweitert und ausgedehnt werden, wodurch dieses Problem weiterhin verkompliziert wird. Für solche Kühlkreisläufe gilt ganz allgemein, daß sich das die Verlustwärme transportierende Kühlmedium den Weg des geringsten Widerstandes wählt, so daß es zu solchen unkontrollierten Kreisläufen mit den erwähnten Folgen kommen kann.

Hier setzt nun die Erfindung ein, die darauf abzielt, eine Maßnahme vorzuschlagen, die diesen Nachteil mit einfachen konstruktiven Mitteln beseitigt, so daß unabhängig von der Leistungsfähigkeit der einzelnen Umlaufpumpen und unabhängig von den jeweiligen Strömungswiderständen der zu speisenden Kreise, jeder in sich geschlossene Kreis die für ihn vorgesehene Wärmemenge erhält bzw. abführen kann. Die Lösung dieser komplexen Aufgabe gelingt durch jene Maßnahmen, die im kennzeichnenden Teil des Patentanspruches im einzelnen angeführt sind.

Auch bei einer Heizungsanlage der eingangs erwähnten Art, die eine Vielzahl von zueinander parallel geschalteter, in sich geschlossener Verbraucherkreise besitzt, mußte wiederholt festgestellt werden, vor allem bei großräumigen Anlagen, wie Hotels, Krankenhäuser, großen Verwaltungsgebäude, Wohnanlagen u. dgl., daß das wärmetragende Medium innerhalb dieser Kreise Wege einschlägt, die nicht ohne weiteres vorhersehbar sind mit der Folge, daß im Extremfall aus dem an sich zu beheizenden Verbraucherkreis das wärmetragende Medium zur Gänze abgezogen wird und einem anderen zugeschalteten Verbraucherkreis zufließt. Bedingt ist diese Erscheinung offenbar dadurch, daß in einzelnen Verbraucherkreisen vorgesehene Umlaufpumpen mit Verbraucherkreisen zusammenwirken, die sehr unterschiedliche Strömungswiderstände besitzen, wobei auch diese Strömungswiderstände noch im Betrieb sich verändern können, wenn die einzelnen Verbraucher, wie beispielsweise Heizungsradiatoren, mit Regelventilen ausgestattet sind. Ferner können auch die Umlaufpumpen unterschiedliche Förderleistungen besitzen. Auch für solche Kreise gilt hier ganz allgemein die bekannte physikalische Erkenntnis, daß auch das Heizmedium den Weg des geringsten Widerstandes fließt.

Um diese Nachteile zu vermeiden werden erfindungsgemäß jene Maßnahmen und Merkmale vorgeschlagen, die Inhalt und Gegenstand des kennzeichnenden Teiles des Patentanspruches 2 sind.

Vereinfacht ausgedrückt geht es darum, daß Wärme, in einer oder mehreren Einrichtungen erzeugt, gleichmäßig verteilt und abgeführt wird. Ob dabei die Wärme ein gewünschtes Produkt ist wie bei Heizanlagen oder nur als unangenehme Erscheinung als Verlustwärme z.B. bei Arbeitsmaschinen in Kauf genommen werden muß, ist dabei von untergeordneter Bedeutung. Wesentlich ist, daß zwischen der Stelle, die die Wärme erzeugt (Heizkreis oder Arbeitsmaschine), und jener, wo die Wärme verteilt und abgeführt wird (Radiator oder Kühler) eine Einrichtung vorgesehen ist, die Gegenstand und Inhalt dieser Erfindung ist.

Eine Anlage der bekannten und eingangs erwähnten Art kann als Analogon einer zahlreiche Kreise aufweisenden elektronischen Schaltung gleichgesetzt werden, welche kein eindeutig definiertes Bezugspotential besitzt, aber zahlreiche und sehr unterschiedliche, miteinander in Wirkverbindung stehende Spannungsquellen und Kreise unterschiedlicher Widerstandseigenschaften aufweist, wobei sich eventuell noch letztere betriebsmäßig ändern können. Es fließen hier in den einzelnen Kreisen elektrische Ströme, die sich hinsichtlich ihrer Größe und Richtung dauernd ändern. Übersichtlich und eindeutig werden in einer solchen Schaltung die Stromflußverhältnisse erst dann, wenn die Schaltung sozusagen auf ein einheitliches Bezugspotential gelegt wird, auf welches die einzelnen Spannungsgrößen und damit Stromflüsse beziehbar sind. Eben dieser Aufgabe dient beim Erfindungsgegenstand der hier vorgesehene Behälter, dessen Volumen allein davon bestimmt wird, daß die Vielzahl der erwähnten Vorlauf- und Rücklaufleitungen der einzelnen Kreise an ihm angeschlossen werden können. Dank dieses Behälters, der aus dem genannten Grund sehr klein gehalten werden kann, ist jeder Kreis in sich über diesen Behälter geschlossen, so daß die eingangs erwähnten Nachteile bei großräumigen Anlagen nicht mehr feststellbar sind und zwar unabhängig von den zahlreichen vorhandenen Umlaufpumpen, die eventuell verschiedene Förderleistungen besitzen und unabhängig von den Strömungswiderständen der einzelnen, in sich geschlossenen Verbraucherkreise, von denen nunmehr jeder mit der für ihn vorgesehenen Wärmemenge beschickt werden kann.

Die Erfindung wird anhand von schematischen Skizzen veranschaulicht. Es zeigen : Fig. 1 ein Schema einer Heizeinrichtung mit fünf Verbrauchern ; die Fig. 2 und 3 zwei Schaltscheben in Verbindung mit abwärmeerzeugenden Maschinenanlagen.

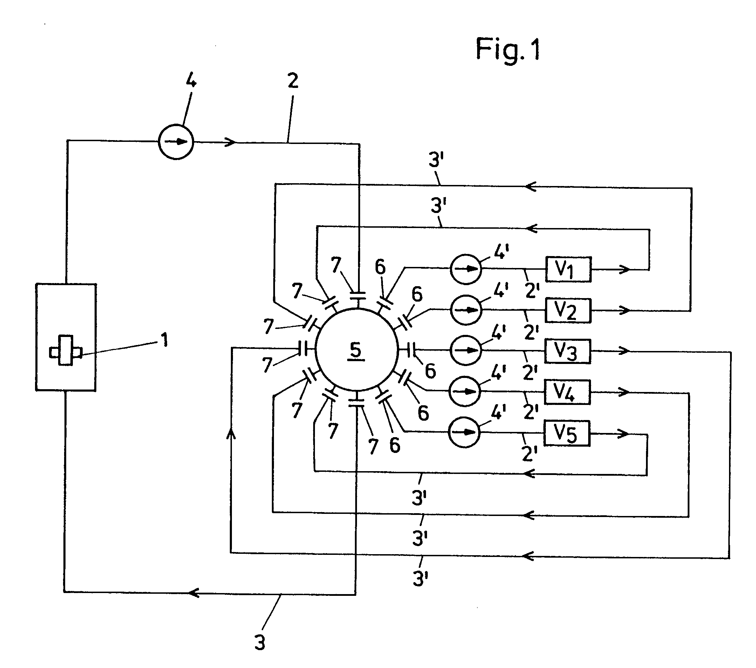

Ein ölbefeuerter Heizkessel 1 (Fig. 1) ist mit einer Vorlaufleitung 2 und einer Rücklaufleitung 3 verbunden, wobei in der Vorlaufleitung 2 noch eine Umlaufpumpe 4 vorgesehen ist. Beide Leitungen 2 und 3 sind direkt an einem Behälter 5 angeschlossen und münden in diesen Behälter. Dieser Behälter 5 besitzt eine Vielzahl von jeweils paarweise vorgesehenen Anschlüssen, wobei der Anschluß für die jeweiligen Vorlaufleitung mit 6 und der Anschluß für die jeweilige Rücklaufleitung mit 7 bezeichnet ist, was auch für die noch zu besprechenden Verbraucherkreise $V_1$-$V_5$ gilt. Wie die schematische Darstellung zeigt, sind bei dieser Anlage fünf Verbraucherkreise $V_1$-$V_5$ vorgesehen, die jeweils in ihrer Vorlaufleitung 2' eine Umlaufpumpe 4' besitzen. Die Vorlaufleitungen 2' der einzelnen Verbraucherkreise sind mit den entsprechenden Anschlußstutzen 6 des Behälters 5 verbunden, die Rücklaufleitungen 3' der Verbraucherkreise $V_1$-$V_5$ sind jeweils mit entsprechenden Anschlußstutzen 7 des Behälters 5 verbunden. Die Umlaufpumpen 4' können durchaus verschiedene Leistungen besitzen und die Strömungswiderstände der einzelnen Verbraucherkreise seien ebenfalls sehr unterschiedlich. Die Verbraucher $V_1$-$V_5$ können Heizungsradiatoren sein, die der Raumheizung dienen, oder aber auch Wärmetauscher, die einen weiteren Verbraucherkreis mit Wärme versorgen (Aufbereitung von Brauchwasser mit offenem Kreis). Wesentlich für die hier zu diskutierende Anordnung ist die Tatsache, daß jeder Verbraucherkreis $V_1$-$V_5$ über seine Vorlaufleitung 2' und über seine jeweilige Rücklaufleitung 3' am Behälter 5 angeschlossen ist.

Die Gestalt und die Größe des Behälters 5 ist für die Erfindung ohne Belang, seine Größe wird im wesentlichen davon bestimmt, wie viele Anschlüsse 6 und 7 an ihm vorgesehen werden können. Zweckmäßigerweise sind in diesen Behälter Leitbleche und/oder Strömungswirbler eingebaut, damit das über die Vorlaufleitung 2 des Heizkessels 1 einströmende Warmwasser in diesen Behälter intensiv mit dem bereits hier vorhandenen Wasser vermischt wird, so daß die in diesem Behälter 5 vorhandene geringe Wassermenge in ihrer Gesamtheit eine möglichst einheitliche Temperatur aufweist. Diesem Zweck dient auch der Umstand, daß vorteilhafterweise die Vorlaufleitung und die Rücklaufleitung eines jeden Kreises am Behälter 5 gegeneinander versetzt angeordnet werden. Selbst bei Großraumanlagen genügt in der Regel für den Behälter 5 ein Fassungsvermögen von ca. 5-10 Liter. Da dieser Behälter 5 hier ja primär und allein die Aufgabe hat, ein Bezugspotential für die einzelnen Verbraucherkreise zu bilden, wobei diese einzelnen Verbraucherkreise $V_1$-$V_5$ in sich geschlossen sind, so daß alle Umlaufpumpen 4' all dieser Kreise $V_1$-$V_5$ unabhängig von ihrer jeweiligen Leistung und unabhängig vom jeweiligen Strömungswiderstand des Kreises vom selben Druckniveau aus arbeiten können. Die bislang gemachten praktischen Erfahrungen bestätigen die Richtigkeit dieser Maßnahme.

Zweckmäßigerweise wird der Behälter 5 mit einer Entlüftungseinrichtung ausgestattet, ferner kann hier auch noch eine Zusatzheizung eingebaut sein, der Behälter selbst kann als Zylinder geformt sein oder auch eine Kugelform besitzen.

Sind im gezeigten Ausführungsbeispiel alle Verbraucherkreise $V_1$-$V_5$ direkt über ihre jeweilige Vorlauf- und Rücklaufleitung 2' und 3' mit dem Behälter 5 direkt verbunden, so ist es grundsätzlich denkbar, Verbraucherkreise gleicher Strömungswiderstände und gleicher Umlaufpumpenleistungen über einen zusätzlichen Verteiler miteinander zu verbinden und die Vorlaufleitung und die Rücklaufleitung dieses Verteilers am Behälter 5 anzuschließen. In diesem Fall werden einige gleichartige Verbraucherkreise über einen Verteiler zusammengefaßt und dieser Verteiler erst wird mit seiner Rücklaufleitung und Vorlaufleitung mit dem Behälter 5 verbunden. Unter gleichartigen Verbraucherkreisen wird hier verstanden, daß die Pumpenleistungen der einzelnen Kreise einander entsprechen und auch deren Strömungsverhältnisse etwa gleich sind.

In Anlagen der hier gezeigten Art sind zur Regelung und Steuerung Temperatur messer und Temperaturfühler Regel- und Mischventile eingebaut. Diese Ventile, Meß- und Steuereinrichtungen u. dgl. sind hier nicht eingetragen, um das erfindungsgemäße Anlagenprinzip möglichst deutlich darzustellen. Auch nicht jene manuell zu betätigenden Ventile und Absperrorgane, die dazu dienen, einzelne Abschnitte der Anlage abzuschalten, damit sie überholt und revidiert werden können.

Beim schematisch gezeigten Ausführungsbeispiel nach Fig. 1 ist am Behälter 5 eine einzige Heizquelle 1 (ölbefeuerter Heizkessel) angeschlossen. Besitzt die Anlage mehrere Wärmequellen, die an sich unterschiedlich aufgebaut sein können, so werden diese Wärmequellen über ihre jeweiligen Vorlaufleitungen und Rücklaufleitungen direkt am Behälter 5 angeschlossen.

In der schematischen Darstellung nach Fig. 1 ist der Behälter 5 größer dargestellt als der Heizkessel 1. Das hat hier nichts zu besagen und resultiert nur aus der Tatsache, daß für den Behälter 5 eine entsprechend große Vielzahl von Anschlußmöglichkeiten 6 und 7 vorgesehen werden müssen, die hier ihren Platz fordern. Daraus resultiert hier das Größenverhältnis der besprochenen Anlagenteile. Es sei aber aus diesem Grund nochmals darauf hingewiesen, daß dieser Behälter 5 auch bei großräumigen Anlagen nur ein relativ geringes Fassungsvermögen von beispielsweise ca. 5-10 Litern benötigt, um seine Aufgabe erfüllen zu können und seine Größe, insbesondere seine Oberfläche bestimmt ist durch die Anzahl der unterzubringenden Anschlüsse 6 und 7.

Wenn auch in der Regel der Behälter 5 kleiner ist als das Fassungsvermögen der Wärmequelle oder der Wärmequellen, so sei hier noch ergänzend vermerkt, daß es Wärmequellen mit sehr kleinem Fassungsvermögen und hoher Wärmeleistung gibt, beispielsweise elektrische Durchlauferhitzer oder Plattenwärmetauscher. In diesem Fall kann das Fassungsvermögen des Behälters 5 auch größer sein als jenes der Wärmequelle, da das Fassungsvermögen des Behälters 5 durch die Größe seiner Oberfläche bestimmt wird, die notwendig ist, um alle erforderlichen Anschlüsse 6 und 7 unterbringen zu können. Die Form des Behälters 5 kann beliebig gewählt werden und die Wahl dieser Form wird primär von der Überlegung getragen sein, auf der zur Verfügung stehenden Oberfläche des Behälters 5 möglichst viele Anschlüsse 6 und 7 anordnen zu können.

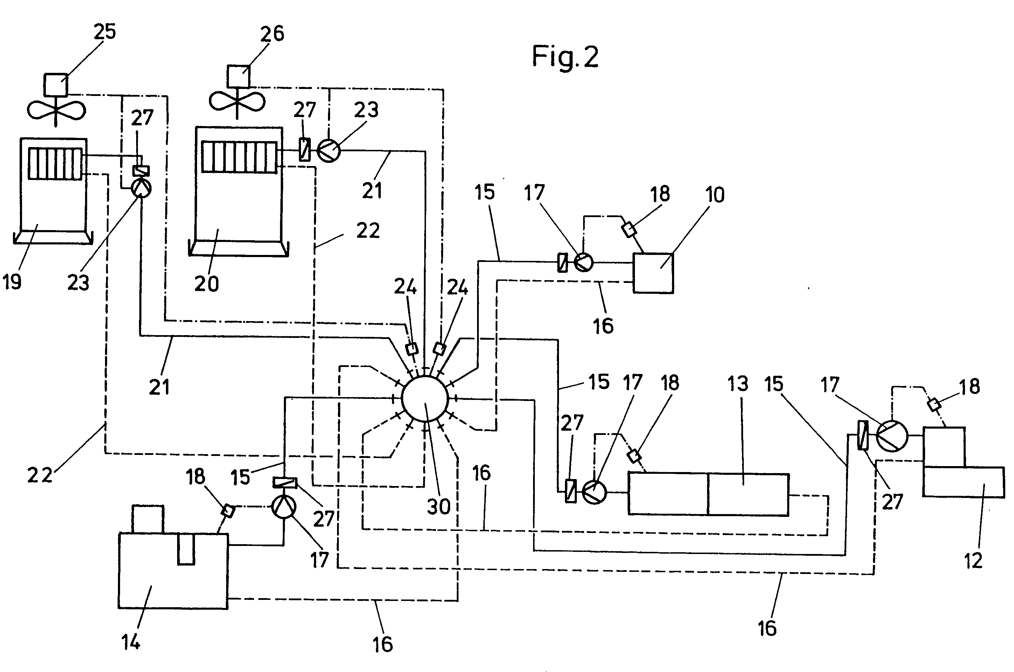

Nachstehend wird anhand der Fig. 2 eine Maschinenanlage erläutert, die beim betriebsmäßigen Einsatz Verlustwärme erzeugt, welche abgeführt oder anderweitig verwendet werden muß.

Die Erfindung bezieht sich auf eine Einrichtung bei Verlustwärme erzeugenden Anlagen, wobei die Anlage mehrere Verlustwärme erzeugende Maschinen, Maschinensätze, Arbeitsvorrichtungen, Geräte oder dgl. aufweist, wobei diese Maschinen oder dgl. von einem die Verlustwärme aufnehmenden und zu einer Kühleinrichtung führenden Kühlmedium durchströmt sind, und in den das Kühlmedium führenden Leitungen Umlaufpumpen angeordnet sind und sowohl die die Verlustwärme erzeugenden Maschinen wie auch die Kühleinrichtung mindestens je eine Vorlauf- und mindestens je eine Rücklaufleitung für das die Verlustwärme transportierende und in einem geschlossenen Kreislauf geführte Kühlmedium aufweist.

Hier setzt die Erfindung nun ein, die darauf abzielt, eine Lösung für diese Nachteile vorzuschlagen, so daß unabhängig von der Leistungsfähigkeit der einzelnen Umlaufpumpen und unabhängig von den jeweiligen Strömungswiderständen der einzelnen Kühlkreise jeder in sich geschlossene Kühlkreis die für ihn vorgesehene Kühlleistung erhält. Die Lösung dieser Aufgabe gelingt erfindungsgemäß durch, daß zwischen den die Verlustwärme erzeugenden Maschinen oder dgl. und der Kühleinrichtung ein Behälter vorgesehen ist, und die Vorlaufleitungen und die Rücklaufleitungen für das Kühlmedium der Maschinen und die Vorlaufleitung und die Rücklaufleitung der Kühleinrichtung direkt mit diesem Behälter verbunden sind und in diesen münden und die Anschlüsse einer Vorlaufleitung und einer Rücklaufleitung eines Kreises, bezogen auf einen Durchmesser des Behälters, vorzugsweise gegeneinander versetzt sind und/oder im Behälter ein das durchströmende Kühlmedium mischendes, vorzugsweise gitter- oder netzartiges, maschenbehaftetes Leitorgan vorgesehen ist und die Größe des Behälters vor allem bestimmt ist durch die Anzahl der Anschlüsse der Rück- und Vorlaufleitungen.

Zur Veranschaulichung der Erfindung wird diese anhand der beiliegenden Skizze näher erläutert. In einer hier nicht näher dargestellten Fabrikationshalle stehen beispielsweise mehrere Kunststoffspritzmaschinen 10, 12, 13, 14, die einen unterschiedlichen Aufbau, eine unterschiedliche Leistung und eine unterschiedliche Verlustwärmeerzeugung aufweisen. Jede dieser Maschinen ist zwangs weise gekühlt und besitzt einen Külkreislauf mit je einer Vorlaufleitung 5 und je einer Rücklaufleitung 16. In den Vorlaufleitungen 15 angeordnete Umwälzpumpen 17 sorgen für den zwangsweisen Umlauf des Kühlmediums, wobei jede dieser Umwälzpumpen durch einen die Temperatur des Kühlmediums in der jeweiligen Maschine 10-14 messenden Thermostaten 18 gesteuert wird, beispielsweise ein- oder ausgeschaltet bzw. drehzahlgeregelt wird. In den Vor- und Rücklaufleitungen der einzelnen Maschinen können auch Mehrwegeventile vorgesehen sein, die in Abhängigkeit von der Temperatur des Kühlmediums in der jeweiligen Maschine entweder den ordnungsgemäßen Umlauf durch die Anlage freigeben oder aber den Kühlkreis kurzschließen, so lange bis bei der Inbetriebnahme einer Maschine diese die notwendige Betriebstemperatur erreicht hat. Das ist hier jedoch nicht gezeigt.

Die Kühleinrichtung besteht bei dieser skizzierten Anlage aus zwei Luftkühlern 19 und 20. Jeder Luftkühler ist mit einer Vorlaufleitung 21 und mit einer Rücklaufleitung 22 für das Kühlmedium verbunden, wobei auch hier in den jeweiligen Vorlaufleitungen 21 Umwälzpumpen 23 angeordnet sind. Thermostaten 24 steuern die jeweiligen Lüftermotoren 25 und 26 bzw. die Umwälzpumpen 23. In den einzelnen Leitungen sind ferner Rückschlagklappen 27 angeordnet.

Wesentlich für die Anlage ist nun, daß zwischen den die Verlustwärme erzeugenden Maschinen 10-14 und den Luftkühlern 19 und 20 ein Behälter 30 vorgesehen ist und alle Vorlaufleitungen 15 und alle Rücklaufleitungen 16 für das Kühlmedium dieser Maschinen 10-14 und die Vorlaufleitungen 21 und die Rücklaufleitungen 22 der Kühleinrichtungen 19 und 20 direkt mit diesem Behälter 30 verbunden sind und in diesen münden. Zweckmäßigerweise sind dabei die Anschlüsse einer Vorlaufleitung und einer Rücklaufleitung eines Kühlmedienkreises — bezogen auf den Durchmesser des Behälters 30 — gegeneinander versetzt, wie dies auch die schematische Skizze veranschaulicht. Im Behälter 30 ist ferner zweckmäßigerweise ein das durchströmende Kühlmedium mischendes Leitorgan vorgesehen, das eine gitter-oder netzartige Struktur aufweisen kann oder das maschenbehaftet ist. Die Größe des Behälters 30, also sein räumliches Fassungsvermögen ist dabei nur im wesentlichen von der Anzahl der Anschlüsse der Rück- bzw. Vorlaufleitungen bestimmt. Die Thermostate 24, die die Lüfter zu- bzw. abschalten bzw. deren Drehzahl regeln, ragen in den Behälter 30 und messen die Temperatur des dort befindlichen Kühlmediums. Die Lüftermotoren 25 und 26 sind dabei so angesteuert, daß im Normalbetrieb mit einem Lüfter das Auslangen gefunden werden kann, bei erhöhtem Anfall von Verlustwärme wird dann jeweils der zweite Lüfter zugeschaltet.

Die Umwälzpumpen 17 bzw. 23 können verschiedene Leistungen besitzen und die Strömungswiderstände der einzelnen Kühlkreisläufe, gebildet durch die jeweiligen Vorlauf- und Rücklaufleitungen können ebenfalls sehr unterschiedlich sein. Anstelle von Luftkühlern 19 und 20, wie hier beispielsweise dargestellt, können auch andere Kühleinrichtungen angeordnet sein oder Kühleinrichtungen unterschiedlicher Bauarten, wie Kühlmaschinen, Absorberkühler, Kompressorkühler und dgl. mehr. Wesentlich für die Anlage ist die Tatsache, daß jeder Kühlkreis über seine jeweilige Vorlaufleitung 15 bzw. 21 und über seine jeweilige Rücklaufleitung 16 bzw. 22 direkt am Behälter 30 angeschlossen ist.

Was über die Gestalt und die Größe des Behälters 5 im Zusammenhang mit dem Ausführungsbeispiel nach Fig. 1 gesagt worden ist, gilt auch für den Behälter 30 des Beispieles nach Fig. 2, abgesehen davon, daß zweckmäßigerweise dieser Behälter 30 gekühlt sein wird. Zu diesem Zweck kann er an seiner Außenseite Kühlrippen aufweisen.

Auch hier hat der Behälter 30 die Aufgabe, sozusagen ein einheitliches Bezugspotential zu schaffen und auch hier wird sein Volumen allein davon bestimmt, daß die Vielzahl der erwähnten Vorlauf- und Rücklaufleitungen der einzelnen Kühlkreise an ihm angeschlossen werden können. Dank dieses Behälters 30, der aus dem erwähnten Grund relativ klein gehalten werden kann, ist jeder Kühlkreis in sich über diesen Behälter 30 geschlossen, so daß die eingangs erwähnten Nachteile bei großräumigen Anlagen nicht mehr auftreten, und zwar unabhängig von den zahlreichen vorhandenen Umwälzpumpen, die eventuell ganz verschiedene Förderleistungen besitzen und unabhängig von den Strömungswiderständen der einzelnen in sich geschlossenen Kühlkreise, von denen nunmehr jeder mit der für ihn vorgesehenen Kühlleistung beschickt werden kann.

Auch hier ist zweckmäßigerweise der Behälter 30 auch mit einer Entlüftungseinrichtung ausgestattet. Sind im gezeigten Ausführungsbeispiel alle Kühlkreise der Maschinen direkt über ihre jeweilige Vorlauf- und Rücklaufleitung mit dem Behälter 30 direkt verbunden, so ist es grundsätzlich denkbar, Kühlkreise gleicher Strömungswiderstände und gleicher Umwälzpumpenleistungen über einen zusätzlichen Verteiler miteinander zu verbinden und die Vorlaufleitung und die Rücklaufleitung dieses Verteilers dann am Behälter 30 anzuschließen. In diesem Falle werden einige gleichartige Kühlkreise über einen Verteiler zusammengefaßt und dieser Verteiler erst wird mit seiner Rücklaufleitung und seiner Vorlaufleitung mit dem Behälter 30 verbunden. Unter gleichartigen Kühlkreisen wird hier verstanden, daß die Umwälzpumpenleistungen der einzelnen Kreise einander entsprechen und auch deren Strömungsverhältnisse etwa gleich sind.

In Anlagen der hier skizzenhaft veranschaulichten Art sind zur Regelung und Steuerung der Kühlmedienströme Temperaturmesser und Temperaturfühler und Regel-und Mischventile eingebaut. Diese Ventile, Meß- und Steuereinrichtungen und dgl. sind hier im einzelnen nicht dargestellt, abgesehen von jenen Temperaturfühlern 18, die die Umwälzpumpen 17 steuern, das heißt, sie ein- bzw. ausschalten oder aber in ihrer Drehzahl regeln in Abhängigkeit von der anfallenden Verlustleistung der Maschinen. Nicht dargestellt sind auch jene manuell zu betätigenden Ventile und Absperrorgane, die dazu dienen, einzelne Abschnitte der Anlage abzuschalten, damit sie überholt und revidiert werden können.

In der schematischen Darstellung ist der Behälter 30 im Verhältnis zu den schematisch dargestellten Maschinen 10-14 relativ groß veranschaulicht. Das hat jedoch nichts zu besagen und resultiert nur aus der Tatsache, daß einerseits die Skizze anschaulich die Erfindung darstellen soll und andererseits für den Behälter 30 eine entsprechend große Vielzahl von Anschlußmöglichkeiten für die Vor- und Rücklaufleitung vorgesehen werden müssen, die hier ihren Platz erfordern, um die Installation ordnungsgemäß abwickeln zu können. Daraus resultiert hier das Größenverhältnis der besprochenen Anlagenteile. Es sei aber aus diesem Grund nochmals darauf hingewiesen, daß diese Behälter 30 auch bei selbst großräumigen Anlagen nur ein bescheidenes Fassungsvermögen von beispielsweise 5 bis 10 Litern benötigen, um seine Aufgabe erfüllen zu können und seine Größe, insbesondere seine Oberfläche bestimmt ist durch die Anzahl der unterzubringenden Anschlüsse der Vor- und Rücklaufleitungen. Die Form des Behälters 30 kann beliebig gewählt werden und die Wahl dieser Form wird primär von der Überlegung getragen sein, auf der zur Verfügung stehenden Oberfläche des Behälters 30 möglichst viele Anschlüsse vor Vorlauf- und Rück laufleitungen unterbringen zu können.

Sind im skizzierten Ausführungsbeispiel zwei Luftkühler gezeigt, so ist die Erfindung auch mit Erfolg anwendbar, wenn nur eine Kühleinrichtung vorgesehen ist oder aber, wenn mehrere Kühleinrichtungen vorgesehen werden, solche unterschiedlicher Konstruktion und unterschiedlicher Wirkungsweise.

Was die Form des Behälters 30 betrifft, so wird diese zweckmäßigerweise so gewählt werden, daß bei vorgegebenem Fassungsvolumen eine möglichst große Behälteroberfläche zur Verfügung steht. Diese ermöglicht nicht nur den Anschlag zahlreicher Rück- und Vorlaufleitungen, darüberhinaus begünstigt eine große Oberfläche die Wärmeabfuhr an diesen Behälter 30, zu deren Unterstützung an der Oberfläche dieses Behälters zusätzlich Kühlrippen angeordnet sein können.

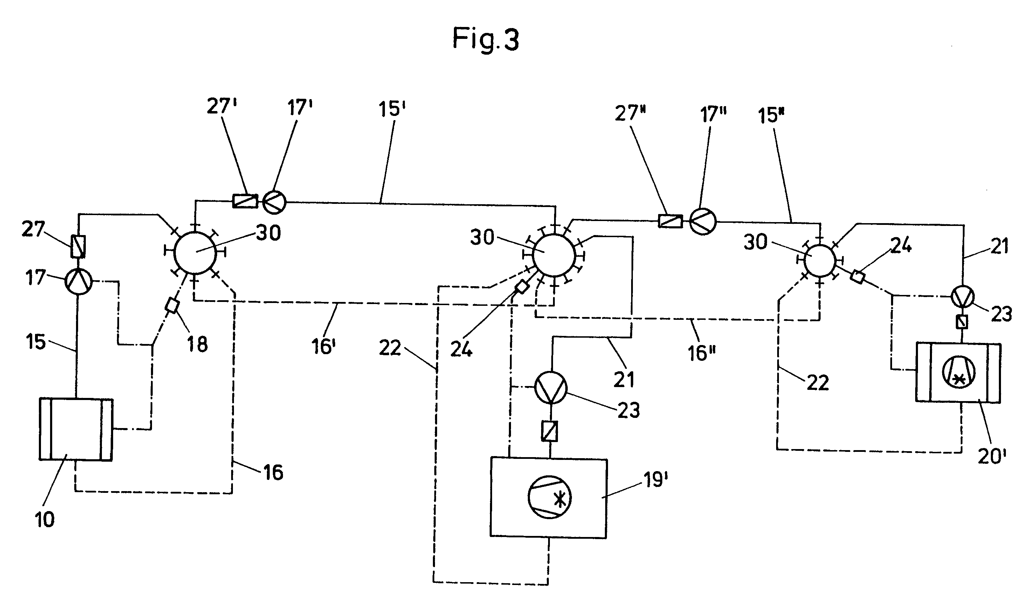

Wird in der Regel bei einer Anlage ein Behälter 30 angeordnet sein, so liegt es im Rahmen der Erfindung, bei sehr großen Anlagen und hoher Kühlleistung mehrere solcher Behälter 30 im Verbund zu schalten. Dies ist in Fig. 3 dargestellt, wo gleiche Anlagenteile mit gleichen Hinweisziffern ausgestattet sind wie in Fig. 2. Anstelle von Luftkühlern sind hier Kühlmaschinen 19' und 20' vorgesehen. In den die Abwärme erzeugenden Maschinen 10 — es ist hier der Übersichtlichkeit wegen nur eine solche Maschine gezeigt — und die Kühlmaschine 19' und 20' die verbindenden Rohrleitungen 15, 15', 15"; 16, 16', 16", 21, 22 mit Umwälzpumpen 17, 17', 17" sind drei Behälter 30 vorgesehen, die im Verbund miteinander angeordnet sind nach Art einer Kaskadenschaltung.

Wurde im Zusammenhang mit dem vorstehend besprochenen, skizzierten Ausführungsbeispiel erwähnt, daß es sich bei den Maschinen 10, 12, 13 und 14 um Kunststoffspritzmaschinen handelt, so ist die Erfindung nicht auf solche Maschinen eingeschränkt. Alle anderen Verlustwärme erzeugenden Maschinen und Anlagenteile, die einer zwangsweisen Kühlung unterworfen sind, können mit der erfindungsgemäßen Einrichtung ausgestattet werden.

Abschließend ist noch zu bemerken, daß bei entsprechend hohen Umwälzzahlen, wie sie mit den heute üblichen Pumpenleistungen bei solchen Anlagen erreicht werden, die Temperatur des Mediums im Behälter 5 bzw. 30 annähernd jener in den Wärme- bzw. Kälteerzeugern entspricht. Folgende Beispiele machen das anschaulich:

```
I.   Kesselleistung 20 KW/h    Pumpenleistung 2000 Ltr./h

     Kesselinhalt                70 Ltr.
     Rohrinhalt                   8 Ltr.
     Volumen des Behälters (5)    6 Ltr.

                                 84 Ltr. =   24 Umwälzungen / Std.



II.  Kesselleistung 150 KW    Pumpenleistung 13000 Ltr./h

     Kesselinhalt               300 Ltr.
     Rohrinhalt                  60 Ltr.
     Volumen des Behälters (5)   15 Ltr.

                                375 Ltr. =   34 Umwälzungen / Std.



III. Elektro-Durchlauf-
     erhitzer 40 KW/h         Pumpenleistung 3500 Ltr./h

     Wärmeerzeuger               30 Ltr.
     Rohrinhalt                  10 Ltr.
     Volumen des Behälters (5)    8 Ltr.

                                 48 Ltr. =   72 Umwälzungen / Std.



IV.  Gas-Kessel 80 KW/h       Pumpenleistung 6800 Ltr./h

     Wärmeerzeuger               90 Ltr.
     Rohrinhalt                  18 Ltr.
     Volumen des Behälters (5)    7 Ltr.

                                115 Ltr. =   59 Umwälzungen / Std.
```

V.   Kälteerzeuger 30 KW/h     Pumpenleistung 4000 Ltr./h

Kühlmaschine                 40 Ltr.
Rohrinhalt                   18 Ltr.
Volumen des Behälters (5)     7 Ltr.

                              65 Ltr. =   61 Umwälzungen / Std.

**Patentansprüche**

1. Anlage mit mehreren Maschinen (10, 12, 13, 14), Maschinensätzen, Arbeitsvorrichtungen, Geräten oder dgl., wobei diese Maschinen oder dgl. von einem zu einer Kühleinrichtung (19, 20) führenden Kühlmedium durchströmt sind, wobei in den das Kühlmedium führenden Leitungen (15, 16, 21, 22) eine Umlaufpumpe (17, 23) angeordnet ist und sowohl die Maschinen (10, 12, 13, 14) als auch die Kühleinrichtung (19, 20) je eine Vorlauf- und Rücklaufleitung für das in einem geschlossenen Kreislauf geführte Kühlmedium aufweisen, dadurch gekennzeichnet, daß zwischen den Maschinen (10, 12, 13, 14) oder dgl. und der Kühleinrichtung (19, 20) ein Behälter (30) vorgesehen ist und die Vorlauf- und die Rücklaufleitungen (15, 16) für das Kühlmedium der Maschinen (10, 12, 13, 14) und die Vorlauf- und Rücklaufleitung (21, 22) der Kühleinrichtung (19, 20) direkt mit diesem Behälter (30) verbunden sind und in diesen münden und die Anschlüsse einer Vorlaufleitung (15, 21) und einer Rücklaufleitung (16, 22) eines Kreises, bezogen auf einen Durchmesser des Behälters (30), gegeneinander versetzt sind und im Behälter (30) ein das durchströmende Kühlmedium mischendes, vorzugsweise gitter- oder netzartiges, Leitorgan vorgesehen ist.

2. Heizungsanlage mit mindestens einer Wärmequelle (1), wie Heizkessel, Wärmepumpe, Wärmetauscher, Solarregister oder dgl., in welcher ein als Wärmeträger dienendes Medium aufgeheizt wird und die Wärmequelle mit einer Vorlauf- und einer Rücklaufleitung (2, 3) verbunden ist und in mindestens einer dieser Leitungen eine Umlaufpumpe (4) vorgesehen ist, und ferner die Anlage eine Vielzahl von zueinander parallel geschalteter Verbraucherkreise (V1-V5) aufweist, welche vom aufgeheizten Medium durchflossen sind, und jeder Verbraucherkreis eine Vorlauf- und eine Rücklaufleitung (2', 3') besitzt und jeweils mindestens in einer dieser Leitungen eine Umlaufpumpe (4') vorgesehen ist und das als Wärmeträger dienende Medium in einem in sich geschlossenen Kreislauf geführt ist, dadurch gekennzeichnet, daß zwischen der Wärmequelle (1) und den Verbraucherkreisen (V1-V5) ein Behälter (5) vorgesehen ist und die Vorlauf- und die Rücklaufleitung (2, 3) der Wärmequelle (1) und die Vorlauf-und die Rücklaufleitungen (2', 3') der überwiegenden Anzahl der Verbraucherkreise (V1-V5) direkt mit diesem Behälter (5) verbunden sind und in diesen münden und die Anschlüsse einer Vorlaufleitung (2, 2') und einer Rücklaufleitung (3, 3') eines Kreises, bezogen auf einen Durchmesser des Behälters (5) gegeneinander versetzt sind und im Behälter (5) ein das durchströmende Medium mischendes, vorzugsweise gitter- oder netzartiges, Leitorgan vorgesehen und der Behälter (5) wärmeisoliert ausgebildet ist.

3. Einrichung nach Anspruch 1 oder 2, dadurch gekennzeichnet, daß innerhalb des Behälters (5, 30) und mindestens vor einer Mündungsöffnung für die Anschlüsse der Vor- und/oder der Rücklaufleitungen Umlenkorgane, beispielsweise schaufelartige Umlenkleitbleche angeordnet sind.

4. Einrichtung nach Anspruch 1 oder 2, dadurch gekennzeichnet, daß das Fassungsvermögen des Behälters (5) kleiner ist als das Fassungsvermögen der Wärmequelle (1) oder der Wärmequellen bzw. jenes der Kühleinrichtung.

**Claims**

1. Installation having a plurality of machines (10, 12, 13, 14), machine sets, operating apparatus, devices or the like, these machines or the like being flowed through by a cooling medium leading to a cooling apparatus (19, 20), a circulation pump (17, 23) being arranged in the lines (15, 16, 21, 22) guiding the cooling medium and both the machines (10, 12, 13, 14) and the cooling apparatus (19, 20) each having a forward flow line and a return flow line for the cooling medium guided in a closed circuit, characterized in that between the machines (10, 12, 13, 14) or the like and the cooling apparatus (19, 20) there is provided a container (30), and the forward flow and the return flow lines (15, 16) for the cooling medium of the machines (10, 12, 13, 14) and the forward flow and the return flow lines (21, 22) of the cooling apparatus (19, 20) are directly connected to this container (30) and open into it and the connections of a forward flow line (15, 21) and a return flow line (16, 22) of a circuit, related to a diameter of the container (30), are offset with respect to one another and there is provided in the container (30) a guide member mixing the cooling medium flowing through and preferably of the grid or grating type.

2. Heating installation having at least one heat source (1), such as a heating boiler, heat pump, heat exchanger, solar register or the like, in which a medium serving as heat transfer medium is heated up and the heat source is connected to a forward flow and a return flow line (2, 3) and a circulation pump (4) is provided in at least one of these lines, and furthermore the installation has a plurality of consumer circuits (V1-V5), connected in parallel with one another, through which the heated-up medium flows, and each consumer circuit has a forward flow and a return flow line (2', 3') and a circulation pump (4') is provided in each case at least in one of these lines and the medium serving as heat transfer medium is guided in a closed circuit, characterized in that there is provided between the heat source (1) and the consumer circuits (V1-V5) a container (5) and the forward flow line and the return flow line (2, 3) of the heat source (1) and the forward flow and the return flow lines (2', 3') of the majority of the consumer circuits (V1-V5) are directly connected to this container (5) and open into it and the connections of a forward flow line (2, 2') and a return flow line (3, 3') of a circuit, related to a diameter of the container (5), are offset with respect to one another and there is provided in the container (5) a guide member mixing the medium flowing through and preferably of the grid or grating type, and the container (5) is of heat-insulated construction.

3. Apparatus according to Claim 1 or 2, characterized in that within the container (5, 30) and at least in front of one mouth opening for the connections of the forward and/or the return flow lines there are arranged deflection members, in particular deflection plates of the bucket type.

4. Apparatus according to Claim 1 or 2, characterized in that the volumetric capacity of the container (5) is smaller than the volumetric capacity of the heat source (1) or of the heat sources or that of the cooling apparatus.

## Revendications

1. Installation avec plusieurs machines (10, 12, 13, 14), groupes de machines, dispositifs de travail, appareils ou similaires, ces machines ou similaires étant traversés par un agent de refroidissement conduisant à un dispositif de refroidissement (19, 20), une pompe de circulation (17, 23) étant disposée dans le circuit des conduites (15, 16, 21, 22) transportant l'agent de refroidissement, les machines (10, 12, 13, 14) et le dispositif de refroidissement (19, 20) présentant chacun une conduite de départ et une conduite de retour pour l'agent de refroidissement transporté dans un circuit fermé, **caractérisée en ce qu'**entre les machines (10, 12, 13, 14) ou similaires et le dispositif de refroidissement (19, 20) est prévu un réservoir (30), en ce que les conduites de départ et de retour (15, 16) de l'agent de refroidissement des machines (10, 12, 13, 14) et les conduites de départ et de retour (21, 22) du dispositif de refroidissement (19, 20) sont directement reliées à ce réservoir (30) et débouchent dans celui-ci, et que les raccordements d'une conduite de départ (15, 21) et d'une conduite de retour (16, 22) d'un circuit, sont disposés aux deux extrémités opposées d'un diamètre du réservoir (30), et qu'un organe directeur, de préférence en forme de grille ou de réseau, assurant le mélange de l'agent de refroidissement au cours de son passage, est prévu dans le réservoir (30).

2. Installation de chauffage avec au moins une source de chaleur (1), telle que chaudière, pompe à chaleur, échangeur de chaleur, capteur solaire ou similaire, dans laquelle un agent servant de fluide caloporteur est chauffé, la source de chaleur étant reliée à une conduite de départ et une conduite de retour (2, 3), une pompe de circulation (4) étant prévue dans au moins une de ces conduites, l'installation présentant en outre un grand nombre de circuits d'utilisation raccordés en parallèle (V1-V5) qui sont traversés par l'agent réchauffé, chaque circuit d'utilisation possédant une conduite de départ et une conduite de retour (2', 3'), une pompe de circulation (4') étant chaque fois prévue dans au moins une de ces conduites, l'agent servant de fluide caloporteur étant transporté en circuit fermé, **caractérisée en ce qu'**entre la source de chaleur (1) et les circuits d'utilisation (V1-V5) un réservoir (5) est prévu, la conduite de départ et la conduite de retour (2, 3) de la source de chaleur (1) et les conduites de départ et conduites de retour (2', 3') de la majorité des circuits d'utilisation (V1-V5) sont directement raccordées à ce réservoir (5) et débouchent dans celui-ci, les raccordements d'une conduite de départ (2, 2') et d'une conduite de retour (3, 3') d'un circuit étant disposés aux extrémités opposées d'un diamètre du réservoir (5), un organe directeur de préférence en forme de grille ou de réseau, assurant le mélange de l'agent au cours de son passage, est prévu dans le réservoir (5), le réservoir (5) étant réalisé de manière thermiquement isolée.

3. Installation selon la revendication 1 ou 2, **caractérisée en ce qu'**à l'intérieur du réservoir (5, 30), des organes de déviation, par exemple des tôles de guidage cintrées, sont disposés devant au moins une ouverture à laquelle aboutissent les raccordements des conduites de départ et/ou de retour.

4. Installation selon la revendication 1 ou 2, **caractérisée en ce que** la capacité en volume du réservoir (5) est inférieure à la capacité en volume de la source thermique (1) ou des sources thermiques ou de l'installation de refroidissement.

Fig.1

Fig.2

Fig.3

EP 0 312 903 B1